# EUROPÄISCHE PATENTSCHRIFT

(11) **EP 2 394 866 B1**
(45) Veröffentlichungstag und Bekanntmachung des Hinweises auf die Patenterteilung: **25.06.2014**
(21) Anmeldenummer: 10165870.6
(22) Anmeldetag: 14.06.2010
(51) Int. Cl.: B60R 21/13

(54) **Überrollkörper für ein Überrollschutzsystem eines Kraftfahrzeuges**
Roll-bar for a rollover protection system of a motor vehicle
Arceau de sécurité pour un système de protection contre les tonneaux d'un véhicule automobile

(43) Veröffentlichungstag der Anmeldung: 14.12.2011
(60) Teilanmeldung: 13150641.2
(73) Patentinhaber: Metalsa Automotive GmbH, 51702 Bergneustadt (DE)
(72) Erfinder: Helsper, Michael, 57078, Siegen (DE); Theus, Katrin, 51647, Gummersbach (DE); Beki, Gürkan, 51766, Engelskirchen (DE)
(74) Vertreter: Kalkoff & Partner

(56) Entgegenhaltungen:
- EP-A1- 2 100 780
- EP-A1- 2 216 211
- DE-A1- 10 360 273
- GB-A- 2 280 456

## Beschreibung

Die Erfindung betrifft einen Überrollkörper für ein Überrollschutzsystem eines Kraftfahrzeuges, mit einem Profilkörper.

Überrollschutzsysteme der eingangs genannten Art sowie hierfür verwendete Überrollkörper sind in vielfältigen Ausgestaltungen aus dem Stand der Technik bekannt. Die Überrollschutzsysteme dienen bei Fahrzeugen wie Cabriolets, welche keine starre Dachstruktur besitzen, zum Schutz der Insassen, indem sie bei einem Überschlag einen Überlebensraum für die Insassen aufspannen. In der Vergangenheit eingesetzte starre Überrollbügel werden dabei bei modernen Fahrzeugen vermehrt durch sogenannte aktive Systeme ersetzt, bei denen ein Überrollkörper in der Ruhelage im Wesentlichen nicht sichtbar angeordnet ist und erst im Gefahrenfall, also bei einem drohenden Überschlag in eine Überschlagsposition aufgestellt wird, um zu verhindern, dass die Fahrzeuginsassen durch das sich überschlagende Fahrzeug erdrückt werden, wie beispielsweise in der EP 2100780 A1 offenbart.

Moderne Lösungen weisen dabei typischer Weise für jeden Sitz einen in einem fahrzeugfesten Kassettengehäuse linear geführten Überrollkörper auf, der in der Ruheposition entgegen einer Vorspannkraft durch eine Haltevorrichtung in einer abgesenkten Position gehalten wird und im Überschlagsfall in eine Überschlagsposition bringbar ist.

Bekannte Überrollkörper existierender Überrollschutzsysteme weisen jedoch den Nachteil auf, dass sie die gestiegenen Anforderungen der Kraftfahrzeughersteller an die geforderten Deformationswege, die das Überrollschutzsystem bei einer definierten Kraft bereitstellen muss, um die bei einem Überschlag von außen auf das System wirkende Energie definiert abbauen zu können, oftmals nicht mehr erfüllen.

Der Erfindung liegt daher die Aufgabe zugrunde, einen Überrollkörper sowie ein Überroll-schutzsystem mit einem Überrollkörper bereit zu stellen, wobei bei möglichst geringem Bauraum ein ausreichender Deformationswege zur Verfügung steht.

Die GB 22 80 456 A beschreibt ein Verstärkungsprofil für den Kraftfahrzeugbau, das unter Stoßeinwirkung kontrolliert und in vorhersagbarer Weise deformiert wird. Aus der DE 103 60 273 A1 ist eine Schutzvorrichtung für Kraftfahrzeuge bekannt, bei der ein Schutzbügel wenigstens einen Längsschnitt höherer Festigkeit aufweist. Die EP 2 100 780 A1 offenbart ein Überrollkörper gemäß dem Oberbegriff des Anspruchs 1.

Die Erfindung löst die Aufgabe, durch einen Überrollkörper mit den Merkmalen des Anspruchs 1. Vorteilhafte Weiterbildungen der Erfindung sind in den abhängigen Ansprüchen angegeben.

Erfindungsgemäß ist der Profilkörper als Hohlkammerprofil mit vorgegebenen, sich zumindest abschnittsweise in Längsachsenrichtung erstreckenden Deformationsbereichen ausgebildet. Als Hohlkammerprofil werden dabei im Rahmen der Erfindung solche Profilkörper verstanden, welche im Querschnitt derart geformt sind, dass sie einen hohlen Innenraum gegenüber dem den Profilkörper umgebenden Außenraum abgrenzen, wobei der Innenraum nicht vollständig ringförmig abgeschlossen sein muss. Kennzeichnend für die Erfindung ist dabei, dass sich an dem Hohlkammerprofil in Längsachsenrichtung definierte Deformationsbereiche erstrecken, welche im Lastfall, d. h. im Falle eines Überschlags, die Art und den Umfang der Deformation aufgrund ihrer Konstruktion bereits vorgeben. Die Anordnung der Deformationsbereiche legt somit im Vorhinein den Deformationsverlauf des Überrollkörpers im Falle eines Überschlags und der hiermit einhergehenden Belastung des Überrollkörpers fest. Durch eine entsprechende Ausgestaltung der Deformationsbereiche lässt sich somit der Deformationsweg des Überrollkörpers an die fahrzeugherstellerseitig geforderten Anforderungen anpassen. Die Deformationsbereiche unterscheiden sich dabei konstruktiv von den an diese Bereiche angrenzenden Bereichen. Erfindungsgemäß sind die Deformationsbereiche durch den Querschnitt des Hohlkammerprofils verjüngende Bereiche gebildet. Demnach weist das Hohlkammerprofil im Querschnitt diesen verjüngende Abschnitte auf. Die Bereiche sind dabei derart ausgebildet, dass sie im Lastfall eine Verformung des Hohlkammerprofils an diesen Bereichen ermöglichen. So kann auch bei gleichbleibender Materialstärke des Hohlkammerprofils eine oder mehrere definierte Deformationsbereiche bereitgestellt werden, so dass die fahrzeugherstellerseitig geforderten Anforderungen in besonders einfacher und kostengünstiger Weise erfüllt werden können.

Dabei sind die verjüngten Bereiche erfindungsgemäß durch sich in Längsachsenrichtung erstreckende Sicken, gegenüberliegend am Hohlkammerprofil angeordnete Sicken gebildet. Die Ausbildung der Sicken an dem Hohlkammerprofil lassen sich in besonders einfacher Weise herstellen. Insbesondere im Fall der gegenüberliegend angeordneten Sicken kann somit eine definierte Faltung des Hohlkammerprofils im Lastfall vorbestimmt werden, wobei die Faltzone sich in einem Bereich zwischen den Sicken erstreckt.

Erfindungsgemäß ist das Hohlkammerprofil als Mehrkammerprofil, insbesondere Doppelkammerprofil ausgebildet. Diese Ausgestaltung der Erfindung ermöglicht es, das Hohlkammerprofil kammerabhängig in unterschiedliche Funktionsbereiche einzuteilen, wobei bspw. eine Kammer zur Deformation geeignet ist, wohingegen eine andere Kammer des Hohlkammerprofils die für den Überrollschutz notwendige Stabilität bietet. Darüber hinaus kann bei einer Ausgestaltung der Erfindung, bei der alle Kammern einen Deformationsweg bereitstellen, die die Kammern voneinander abgrenzenden bspw. Stege Bereiche zur Erhöhung des Deformationswiderstandes genutzt werden. Insbesondere die Ausgestaltung des Hohlkammerprofils als Doppelkammer oder Dreikammerprofil lässt sich besonders einfach und kostengünstig herstellen und ermöglicht darüber hinaus die Herstellung eines Überrollkörpers mit einem ausreichend großen Deformationsweg, wobei gleichzeitig die für den Überrollschutz geforderte Stabilität gewährleistet wird.

Die Ausgestaltung der Deformationsbereiche an dem Hohlkammerprofil kann grundsätzlich in beliebiger Weise erfolgen. Diese erstrecken sich in Längsachsenrichtung des Hohlkammerprofils, wobei nicht zwingend erforderlich ist, dass sich diese über die gesamte Länge des Hohlkammerprofils erstrecken. So ist auch eine Ausgestaltung möglich, wonach in Längsachsenrichtung betrachtet Abschnitte des Hohlkammerprofils frei von Deformationsbereichen sind.

Nach einer besonders vorteilhaften Ausgestaltung der Erfindung sind die Deformationsbereiche durch Abschnitte gebildet, die im Querschnitt eine verminderte Materialstärke aufweisen. Demgemäß weist das Hohlkammerprofil im Querschnitt keine über alle Bereiche gleiche Materialstärke auf, sondern in vordefinierten Bereichen liegt die Materialstärke unter der in den übrigen Bereichen. Im Lastfall erfolgt eine Verformung des Hohlkammerprofils zunächst an den Bereichen geringerer Materialstärke, so dass sich die an diese Bereiche angrenzenden Abschnitte des Hohlkammerprofils relativ zueinander verschieben, wobei die Verstellbarkeit den durch das Hohlkammerprofil bereitgestellten Deformationsweg bestimmt. Insofern ermöglichen die Abschnitte verminderter Materialstärke eine definierte Faltung des Hohlkammerprofils zum Zwecke des Energieabbaus.

Die Anordnung der Abschnitte kann dabei grundsätzlich in beliebiger Weise erfolgen.

Ausführungsbeispiele der Erfindung werden nachstehend mit Bezug auf die Zeichnungen näher erläutert. In den Zeichnungen zeigen:
- Fig. 1: eine perspektivische Ansicht einer ersten Ausführungsform eines Überrollkörpers;
- Fig. 2: eine Schnittansicht des Überrollkörpers von Fig. 1 im nicht deformierten Zustand;
- Fig. 3: eine Schnittansicht des Überrollkörpers von Fig. 1 im deformierten Zustand;
- Fig. 4: eine perspektivische Ansicht des Überrollkörpers von Fig. 1 in der Einbaulage an einer Aufnahme;
- Fig. 5: eine Schnittansicht der Aufnahme von Fig. 4;
- Fig. 6: eine Schnittansicht des in der Aufnahme angeordneten Überrollkörpers von Fig. 4;
- Fig. 7: eine perspektivische Ansicht einer zweiten Ausführungsform eines Überrollkörpers;
- Fig. 8: eine Schnittansicht des Überrollkörpers von Fig. 7 im nicht deformierten Zustand und
- Fig. 9: eine Schnittansicht des Überrollkörpers von Fig. 7 im deformierten Zustand.

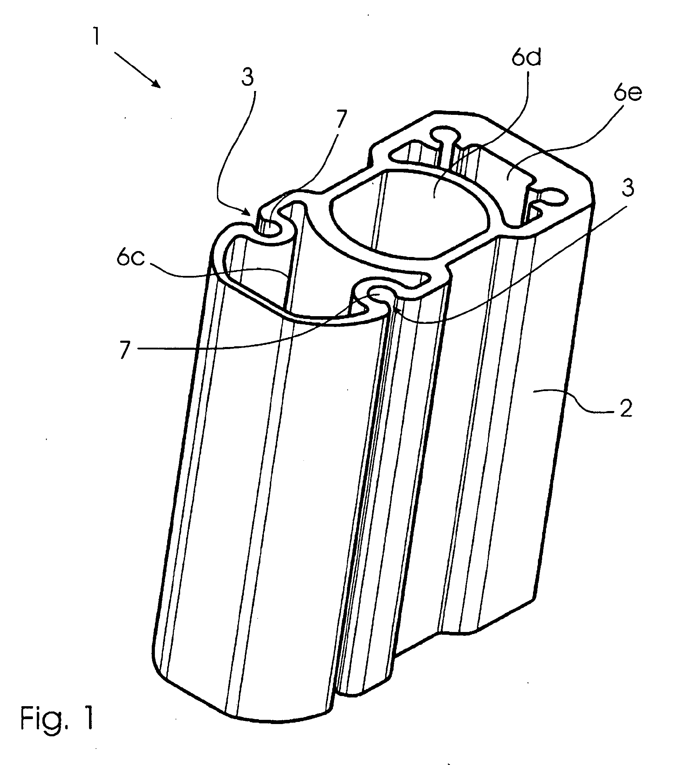

In Fig. 1 ist in einer perspektivischen Ansicht einer ersten Ausführungsform eines durch ein Hohlkammerprofil 2 gebildeten Profilkörper 1 dargestellt. Das Hohlkammerprofil 2 ist als Doppelkammerprofil ausgebildet, wobei ein Steg 8 das Hohlkammerprofil in zwei Kammern 6a, 6b aufteilt.

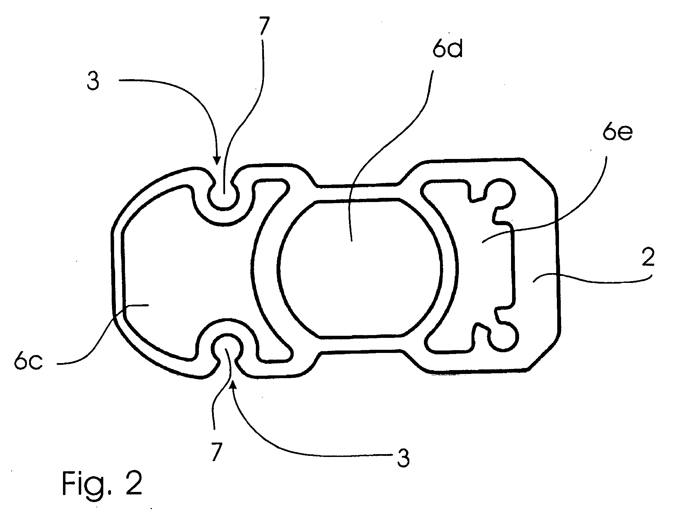

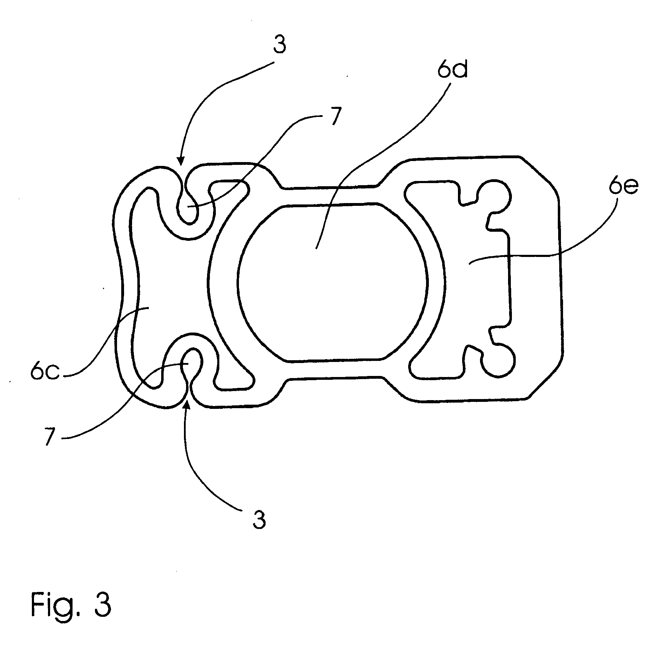

Die Deformationseigenschaften des Hohlkammerprofils 2 werden durch Deformationsbereiche 3a, 3b, 3c vorgegeben, die durch Abschnitte 4a, 4b, 4c geringerer Materialstärke gebildet sind. Die Abschnitte 4a, 4b, 4c verlaufen dabei - mit Bezug auf eine in Fig. 2 und 3 dargestellte Biegelinie - nicht senkrecht zur Biegelinie sondern sind gegenüber dieser abgewinkelt, bzw. gekrümmt, so dass eine definierte Deformation des Hohlkammerprofils 2 zum Abbau der beim Überschlag auftretenden Energie gewährleistet ist.

Im Lastfall kommt es zu einem Zusammendrücken des Hohlkammerprofils 2 aus der in Fig. 2 dargestellten Form in die in Fig. 3 dargestellte deformierte Form, wobei die Ränder des Hohlkammerprofils 2 in Richtung auf die Biegelinie verschoben sind.

Ein erstes Ausführungsbeispiel eines Hohlkammerprofils 2 ist in den Fig. 1-3 dargestellt. Das Hohlkammerprofil 2 weist drei voneinander abgegrenzte Kammern 6c, 6d, 6e auf. In Längsachsenrichtung der Kammer 6c verlaufen an dieser gegenüberliegend angeordnet zur Bildung eines Deformationsbereichs 3 jeweils eine Sicke 7, welche den Querschnitt des Hohlkammerprofils 2 in diesem Bereich verjüngen. Die Sicken 7 stellen einen Deformationsweg bereit, wobei die Kammer 6c im Lastfall aus der in Fig. 2 dargestellten in die in Fig. 3 dargestellte Position deformiert wird. Gleichzeitig gewährleistet die stabil ausgestaltete Kammer 6e in Verbindung mit der Kammer 6d eine hohe Biegesteifigkeit des Hohlkammerprofils 2, so dass im Verlauf der Deformation hierdurch weitere Energie abgebaut werden kann.

## Patentansprüche

1. Überrollkörper für ein Überrollschutzsystem eines Kraftfahrzeuges, mit einem Profilkörper, wobei
- der Profilkörper (1) als Hohlkammerprofil (2) in Form eines Mehrkammerprofils (2a) mit vorgegebenen, sich zumindest abschnittsweise in Längsachsenrichtung erstreckenden Deformationsbereichen (3d) ausgebildet ist, **dadurch gekennzeichnet, dass**
- die Deformationsbereiche (3d) durch den Querschnitt des Hohlkammerprofils (2) verjüngende Bereiche gebildet sind und als in Längsachsenrichtung einer Kammer (6c) an dieser gegenüberliegend angeordnete Sicken (7) verlaufen.

2. Überrollkörper nach Anspruch 1, **dadurch gekennzeichnet, dass** das Hohlkammerprofil (2) als Doppelkammerprofil ausgebildet ist.

3. Überrollkörper nach Anspruch 1 oder 2, **dadurch gekennzeichnet, dass** bei einem Mehrkammerprofil (2a) mindestens eine Kammer deformationsbereichsfrei ausgebildet ist.

## Claims

1. A roll-bar for a rollover protection system of a motor vehicle, with a profile body, wherein
- the profile body (1) is designed as a hollow chamber profile (2) in the form of a multichamber profile (2a) with predetermined deformation areas (3d) extending at least in sections in the direction of the longitudinal axis, **characterized in that**
- the deformation areas (3d) are formed by areas tapering the cross-section of the hollow chamber profile (2) and progress in the direction of the longitudinal axis of a chamber (6c) in the form of beads (7) that are arranged opposite this chamber.

2. The roll-bar according to claim 1, **characterized in that** the hollow chamber profile (2) is designed as a double chamber profile.

3. The roll-bar according to claim 1 or 2, **characterized in that**, in the case of a multichamber profile (2a), at least one chamber is designed free of deformation areas.

## Revendications

1. Arceau de sécurité pour un système de protection contre les tonneaux d'un véhicule automobile, avec un corps profilé,
- le corps profilé (1) étant constitué en tant que profilé à chambre creuse (2) sous forme de profilé à chambres multiples (2a) avec des zones de déformation (3d) prédéfinies s'étendant au moins par tronçons dans la direction de l'axe longitudinal, **caractérisé en ce que**
- les zones de déformation (3d) sont formées par des zones rétrécissant la section transversale du profilé à chambre creuse (2) et sont placées en tant que moulures (7) disposées dans la direction de l'axe longitudinal d'une chambre (6c) et face à celle-ci.

2. Arceau de sécurité selon la revendication 1, **caractérisé en ce que** le profilé à chambre creuse (2) est constitué en tant que profilé à chambre double.

3. Arceau de sécurité selon la revendication 1 ou 2, **caractérisé en ce que**, dans le cas d'un profilé à chambres multiples (2a), au moins une chambre est constituée sans zone de déformation.
